# EUROPÄISCHE PATENTSCHRIFT

(11) **EP 3 545 060 B1**
(45) Veröffentlichungstag und Bekanntmachung des Hinweises auf die Patenterteilung: **20.01.2021**
(21) Anmeldenummer: 17821789.9
(22) Anmeldetag: 22.11.2017
(51) Int. Cl.: C10M 169/04

(54) **OBERFLÄCHENMATERIAL AUF POLYAMID BASIS MIT FÜLLSTOFFEN FÜR GLEITELEMENT**
POLYAMIDE BASED MATERIAL CONTAINING FILLERS FOR SLIDING ELEMENT
MATÉRIAU DE SURFACE À BASE DE POLYAMIDE AVEC DES CHARGES POUR UN ROULEMENT COULISSANT

(30) Priorität: 22.11.2016 DE 102016122476; 22.11.2016 DE 102016122475; 19.09.2017 DE 102017121725
(43) Veröffentlichungstag der Anmeldung: 02.10.2019
(73) Patentinhaber: KS Gleitlager GmbH, 68789 St. Leon-Rot (DE)
(72) Erfinder: REINICKE, Rolf, 76669 Bad Schoenborn (DE); BICKLE, Ruediger, 68799 Reilingen (DE); DICK, Steffen, 67659 Kaiserslautern (DE)
(74) Vertreter: DREISS Patentanwälte PartG mbB
(86) Internationale Anmeldenummer: PCT/EP2017/080102
(87) Internationale Veröffentlichungsnummer: WO 2018/095986

(56) Entgegenhaltungen:
- EP-A1- 2 677 021
- DE-A1-102008 026 519
- US-A1- 2011 082 059
- US-A1- 2014 106 914

## Beschreibung

Die Erfindung betrifft ein Oberflächenmaterial auf Polyamidbasis mit die tribologischen und insbesondere Verschleißeigenschaften verbessernden Füllstoffen.

Neben anderen Anwendungen, wie Zahnräder und Getriebebauteile finden Oberflächenmaterialien als Gleitmaterialien z.B. in Gleitlagern Verwendung.

Im Stand der Technik sind Oberflächenmaterialien in Form von Gleitmaterialien, die Polyamide verwenden, bekannt. So wird beispielsweise ungefülltes Polyamid 4.6 eingesetzt, das jedoch für kritische Anwendungen im Nutzfahrzeugbereich nicht verschleißfest genug ist.

Darüber hinaus sind eine Vielzahl von weiteren Gleitmaterialien bekannt, die beispielsweise auf PTFE-Basis beruhen und Polyamid lediglich als Füllstoff verwenden.

Etwas Entsprechendes ist beispielsweise in der DE 10 2011 077 008 A1 beschrieben, die einen Gleitlagerverbundwerkstoff auf PTFE-Basis beschreibt, bei der Füllstoffe umfassend Thermoplaste und/oder Duroplaste und weitere tribologisch wirksame Stoffe zusammen in compoundierter Form in der Polymerbasis des Gleitschichtmaterials vorliegen.

Den Einsatz von Polyamiden als Festschmierstoffe in lösungsmittelfreien Polyamidimidgleitlacken auf Wasserbasis hat die DE 10 2013 021 949 A1 zum Gegenstand.

US 2014/0106914 beschreibt Gleitmaterialen auf Polyamidbasis enthaltend dispergierte anorganische Füllstoffe wie zum Beispiel Molybdändisulfid.

Neben dem Einsatz als klassischem Gleitmaterial besteht ein weiteres Anwendungsfeld für derartige Oberflächenmaterialien für Getriebeteile, so wie Zahnräder, die aufgrund des reibenden oder wälzenden Kontakts mit einem Gegenpart einem nicht unerheblichen Verschleiß unterliegen.

Ausgehend von diesem Stand der Technik war es nun Aufgabe der Erfindung, die tribologischen Eigenschaften und insbesondere die Verschleißfestigkeit von Oberflächenmaterialien auf Polyamidbasis zu verbessern.

Diese Aufgabe wird durch ein Oberflächenmaterialmit den Merkmalen des Anspruchs 1 gelöst.

Darüber hinaus betrifft die Erfindung Formkörper und Gegenstände aus oder mit dem erfindungsgemäßen Oberfächenmaterial mit den Merkmalen der Ansprüche 11-15.

Dabei hat sich überraschenderweise herausgestellt, dass der Zusatz von einem oder mehreren Metallsufiden und Calciumphosphat zur Polyamidbasis die Verschleißfestigkeit des Oberflächenmaterials signifikant verbessert. Das vorliegende Oberflächenmaterial eignet sich dabei insbesondere für Verwendungen außerhalb des Motors im Automobilbereich, insbesondere in fettgeschmierten Systemen, wie Getriebebauteilen, Zahnrädern, Nutzfahrzeugbremssystemen, Achsschenkellagerungen, etc. Bei derartigen Anwendungen besteht der Wunsch, bleifreie Oberflächenmaterialien einzusetzen. Das vorliegende Oberflächenmaterial stellt nun ein Material bereit, das eine ausreichende Verschleißfestigkeit aufweist.

Beim erfindungsgemäßen Oberflächenmaterial wird eine Polyamidbasis als Polymerbasis verwendet. Dies bedeutet nicht zwingend, dass die gesamte Polymerbasis zu 100% aus Polyamid bestehen muss. Anteile bis zu 30 Gew.-% des Polymeranteils, insbesondere bis 20 Gew.-% und vorzugsweise nur bis 10 Gew.-% der Polyamidbasis können durch andere Polymere und Kombinationen daraus, wie insbesondere PTFE, aber auch z. B. PVDF, PFA, FEP, ECTFE, ETFE ersetzt sein. Vorzugsweise besteht die gesamte Polyamidbasis zu 100 Gew.-% aus Polyamid.

Nach einer besonders bevorzugten Ausführungsform ist vorgesehen, dass die Polyamidbasis PA 4.6 umfasst und insbesondere zu mindestens 60 Gew.-%, insbesondere zu mindestens 70 Gew.-%, insbesondere mindestens zu 80 Gew.-%, insbesondere zu mindestens 90 Gew.-% und insbesondere zu 100 Gew.-% aus PA 4.6 besteht.

Daneben können zur weiteren Verbesserung der Eigenschaften des Oberflächenmaterials, insbesondere zur besseren Compoundierbarkeit der Materialien, zwischen 0 Gew.-% und 40 Gew.-%, insbesondere 1 Gew.-% bis 30 Gew.-% und insbesondere 5 Gew.-% bis 20 Gew.-% der Polyamidbasis weitere von PA 4.6 verschiedene Polyamide eingesetzt werden, insbesondere PA 6 und/oder PA 6.6.

Besonders vorteilhafte Eigenschaften ergeben sich, wenn der Anteil an dem einen oder mehreren Metallsulfiden und Calciumphosphat in Summe 1 Gew.-% bis 30 Gew.-%, insbesondere 1 Gew.-% bis 20 Gew.-% und insbesondere 5 Gew.-% bis 15 Gew.-%, insbesondere 10 Gew.-% des Oberflächenmaterials beträgt. Je nach konkreter Auswahl der Füllstoffe kann es auch besonders bevorzugt sein, wenn der Anteil aus Calciumphosphat und/oder Metallsulfiden 5 Gew.-% oder 10 Gew. -% beträgt jeweils bezogen auf das Oberflächenmaterial.

Dabei ist es besonders bevorzugt, dass sowohl das mindestens eine Metallsulfid als auch Calciumphosphat eingesetzt werden. Dabei beträgt der Anteil des mindestens einen Metallsulfids 1 bis 50 Gew.-% und von Calciumphosphat 50 bis 99 Gew.-% an der Mischung aus Metallsufid und Calciumphosphat. Insbesondere beträgt der Anteil an Metallsulfid 3 bis 40 Gew.-% und von Calciumphosphat von 60 bis 97 Gew.-%. Weiter insbesondere beträgt der Anteil an Metallsulfid 5 bis 30 Gew.-% und von Calciumphosphat von 70 bis 95 Gew.-%.

Besonders bevorzugt können Mischungen aus Calciumphosphat und einem oder mehreren Metallsulfiden, insbesondere MoS₂, SnS₂, WS₂ oder Bismutsulfid sowie Kombinationen der vorgenannten eingesetzt werden. Ebenfalls ist besonders bevorzugt ist die Verwendung von WS₂

Als besonders bevorzugt haben sich Füllstoffe folgender Zusammensetzung erwiesen:
2-20 Gew.-% SnS₂,
70-97 Gew.-% Calciumphosphat
1-10 Gew.-% WS₂.

Dabei beziehen sich die Gewichtsangaben auf die Summe der Gewichte der drei Füllstoffe. Die Summe der Anteile ergibt dabei 100 Gew.-%. Diese Zusammensetzung kann dann zu 1 Gew.-% bis 30 Gew.-%, insbesondere 1 Gew.-% bis 20 Gew.-% und insbesondere 5 Gew.-% bis 15 Gew.-%, insbesondere 10 Gew.-% bezogen auf das Gewicht des Oberflächenmaterials, im Oberflächenmaterial eingesetzt werden. Je nach konkreter Auswahl der Füllstoffe kann es auch besonders bevorzugt sein, wenn der Anteil aus Calciumphosphat und Metallsulfiden 5 Gew.-% beträgt bezogen auf das Gewicht des Oberflächenmaterials.

Eine weitere besonders bevorzugte Zusammensetzung an Füllstoffen sind
50 Gew.-% Calciumphosphat
50 Gew.-% WS₂
bezogen auf die Summe der Gewichte der beiden Füllstoffe der Zusammensetzung.

Besonders bevorzugt sind dabei Gewichtsverhältnisse Calciumphosphat zu Metallsulfid von 5:1 bis 1:1.

Für eine bevorzugte Zusammensetzung der Füllstoffe von SnS₂ / Calciumphosphat / WS₂ (jeweils Massenanteile bezogen auf den Massenanteil von WS₂) ergeben sich bevorzugte Anteile wie folgt:
1-3 SnS₂,
9-13 Calciumphosphat
1 WS₂,
und insbesondere
1,67 SnS₂,
11 Calciumphosphat
1 WS₂.

Alternativ besonders bevorzugt sind als Füllstoffe Calciumphosphat und WS₂ im Massenverhältnis von 1:1.

Derartige Füllstoffzusammensetzungen bieten bei solchen Oberflächenmaterialien besonders gute tribologische Eigenschaften, die insbesondere die Verschleißeigenschaften von z.B. Gleitlagern, Gleitführungen aber auch von Getriebeteilen oder auch Zahnrädern sowie Transportketten und Kabel- und Kettenführungen positiv beeinflussen.

Bezogen auf die Masse des Oberflächenmaterials können die Füllstoffe vorteilhafterweise auch folgende Zusammensetzung aufweisen:
5 Gew.-% Calciumphosphat und 5 Gew.-% WS₂.

Darüber hinaus können die Füllstoffe weitere tribologisch wirksame Stoffe umfassen, z.B. Verstärkungsstoffe, wie insbesondere Kohlenstofffasern, Glasfasern, Polymerfasern (insbesondere Aramidfasern); und/oder Festschmierstoffe, wie insbesondere PTFE, ZnS, BaSO₄, Graphit, Ruß, BN und/oder Kunststoffpartikel, wie insbesondere Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere CaF₂, NaF, AlF₃; und/oder Schichtsilikate, wie insbesondere Kaolin, Glimmer, Wollastonit, Talkum, gefällte Kreide, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al oder Co-Cr.

Dabei ist es besonders bevorzugt, wenn der Anteil der weiteren tribologisch wirksamen Stoffe 0 Gew.-% bis 40 Gew.-%, insbesondere 1 Gew.-% bis 20 Gew.-%, insbesondere 1 Gew.-% bis 10 Gew.-%, insbesondere 5 Gew.-% des Oberflächenmaterials beträgt.

Besonders bevorzugt ist dabei die Verwendung von Schichtsilikaten, insbesondere Kaolin und/oder Wollastonit und /oder Talkum, und/oder Festschmierstoffen, insbesondere BaSO₄ und/oder ZnS.

Weiterhin ist besonders bevorzugt vorgesehen, dass die Polyamidbasis 50 Gew.- bis 95 Gew.-%, insbesondere 60 Gew.-% bis 95 Gew.-% und insbesondere 70 Gew.-% bis 90 Gew.-% des Oberflächenmaterials bildet. Auf diese Weise können die Eigenschaften des Polyamidmaterials das Oberflächenmaterial in hinreichender Weise beeinflussen.

Das Oberflächenmaterial kann dabei zur Herstellung eines Gleitlagerverbundwerkstoffs dienen mit einer metallischen Stützschicht, insbesondere aus Stahl oder Bronze, optional mit einer porösen Trägerschicht, insbesondere aus Bronze und mit einem die Poren der optionalen Trägerschicht ausfüllenden und als Gleitmaterial dienenden Oberflächenmaterial der vorstehend beschriebenen Art. Hierzu wird das Oberflächenmaterial mit seinen Füllstoffen in ein folienartiges Flachmaterial extrudiert und dieses Flachmaterial wird auf eine metallische Stützschicht aufgebracht, bzw. in die Poren der porösen Trägerschicht einimprägniert, wobei hierfür vorzugsweise ein Heißpressprozess und/oder ein Walzvorgang eingesetzt wird.

Darüber hinaus umfasst die Erfindung auch einen dreidimensionalen Formkörper bestehend aus oder mit einem Oberflächenmaterial der vorstehend beschriebenen Art, der insbesondere als Spritzguss- oder Extrusionsteil hergestellt ist. Der Formkörper kann darüber hinaus an ein Trägerteil aus einem anderen Material angefügt, insbesondere an dieses angespritzt sein. Es sind aber auch mechanische oder andere stoffschlüssige Verbindungsarten denkbar. Ebenfalls sind additive Fertigungsverfahren denkbar, mit denen der Formkörper hergestellt werden kann. Der Formkörper kann als Gleitlagerelement aber auch als Getriebebauteil oder z.B. als Zahnrad ausgebildet sein oder Verwendung finden.

Dabei betragen die Abmessungen des Formkörpers in jeder Dimension mindestens 1 mm, insbesondere mindestens 2 mm und weiter insbesondere mindestens 5 mm oder mindestens 6 mm. Selbstverständlich können die Abmessungen demgegenüber auch sehr viel größer sein.

Der mit dem Oberflächenmaterial gebildete Gleitlagerverbundwerkstoff oder der aus oder mit dem Oberflächenmaterial gebildete dreidimensionale Formkörper können als Gleitlagerelement eingesetzt werden, wobei ein Gleitlagerelement beispielsweise eine Gleitleiste, ein Gleitschuh, ein Gleitkissen sowie eine Gleitlagerschale, eine Gleitlagerbuchse oder eine Gleitlagerbundbuchse sein kann. Bei einem Gleitschuh oder einer Gleitleiste betragen die Abmessungen des Formkörpers in jeder Dimension mindestens 1 mm, insbesondere mindestens 2 mm und weiter insbesondere mindestens 5 mm oder mindestens 6 mm. Selbstverständlich können die Abmessungen demgegenüber auch sehr viel größer sein. Grundsätzlich sind auch Schalenformen, wie insbesondere Kugelschalenformen, Buchsen- oder Bundbuchsen sowie weitere Bauteile bei der Verwendung des Formkörpers denkbar.

Bei Gleitelementen kann es sich darüber hinaus auch um typischerweise gerollte zylindrische Buchsen oder halbschalenförmige Gleitlagerelemente handeln, die mit dem Gleitlagerverbundwerkstoff hergestellt werden. Der Gleitlagerverbundwerkstoff kann auch zur Herstellung von Bundbuchsen oder Topfbuchsen oder ebenen und sphärischen Gleitlagerelementen eingesetzt werden.

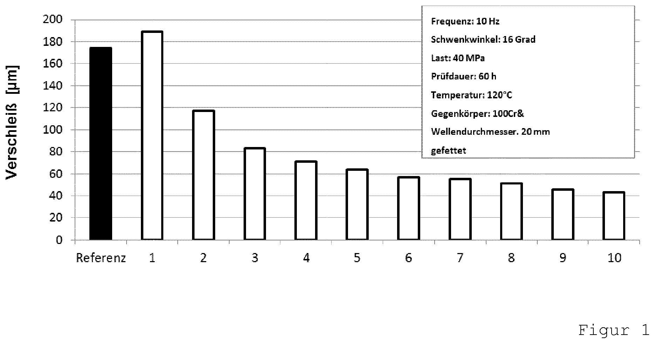

In der nachfolgenden Tabelle sind Beispiele für ein als Gleitmaterial dienendes Oberflächenmaterial angegeben. Die Verschleißwerte sind in Figur 1 gezeigt.

Die Beispiele 1 bis 3 sind Vergleichsbeispiele.

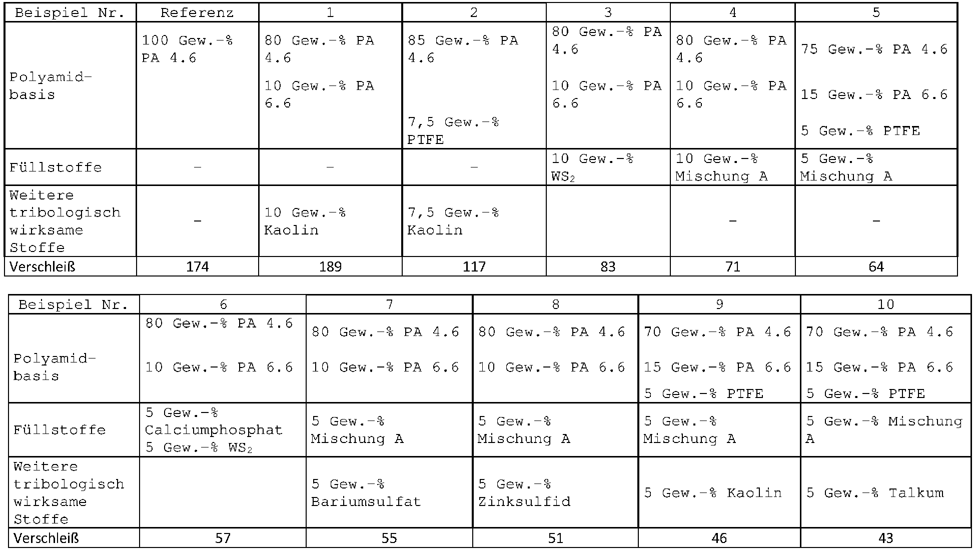

Mischung A: 1,67 Anteile SnS₂
11 Anteile Calciumphosphat
1 Anteil WS₂

Die Verschleißwerte in µm sind in der nachfolgenden Figur 1 aufgetragen zusammen mit den Parametern der Messung:
Figur 1 kann entnommen werden, dass die Zugabe von Füllstoffen der Mischung A oder die Zugabe von Calciumphosphat zusammen mit WS₂ bzw. die Zugabe von WS₂ alleine als beispielhaftes Metallsulfid die Verschleißwerte deutlich senkt und damit die Verschleißfestigkeit verbessert.

Die vorstehend dargestellten Beispiele 3 bis 10 stellen bevorzugte Zusammensetzungen des erfindungsgemäßen Oberflächenmaterials dar, wobei die Polyamidbasis aus zwei verschiedenen Polyamiden mit Schwerpunkt PA 4.6 sowie teilweise PTFE gebildet ist und hierzu Anteile von 5 Gew.-% oder 10 Gew.-% einer Mischung A von Zinndisulfid, Calciumphosphat und Wolframdisulfid im Verhältnis 5:33:3 Gew.-% zugegeben wurde sowie teilweise ein weiterer tribologisch wirksamer Stoff, wie beispielsweise 5 Gew.-% Bariumsulfat, Zinksulfid, Kaolin oder Talkum in den Beispielen 7-10. Eine alternative Zusammensetzung der Füllstoffe ist in den Beispielen 3 und 6 gezeigt. Die Beispiele 1 bis 2 sind Vergleichsbeispiele. Ein Oberflächenmaterial aus PA 4.6 ohne Füllstoffe und weitere Bestandteile dient als Referenz.

## Patentansprüche

1. Oberflächenmaterial auf Polyamidbasis mit die tribologischen Eigenschaften verbessernden Füllstoffen, **dadurch gekennzeichnet, dass** die Füllstoffe mindestens ein Metallsulfid und Calciumphosphat umfassen und dass der Anteil an dem mindestens einen Metallsulfid und Calciumphosphat in Summe 1 - 30 Gew.-% des Oberflächenmaterials beträgt und dass der Anteil des mindestens einen Metallsulfids 1 bis 50 Gew.-% und von Calciumphosphat 50 bis 99 Gew.-% an der Mischung aus Metallsulfid und Calciumphosphat beträgt.

2. Oberflächenmaterial nach Anspruch 1, **dadurch gekennzeichnet, dass** die Polyamidbasis des Oberflächenmaterials mindestens 70 Gew.-%, insbesondere mindestens 80 Gew.-%, insbesondere mindestens 90 Gew.-% und insbesondere 100 Gew.-% Polyamid umfasst.

3. Oberflächenmaterial nach Anspruch 1 oder 2, **dadurch gekennzeichnet, dass** die Polyamidbasis PA 4.6 umfasst und insbesondere mindestens zu 60 Gew.-% insbesondere mindestens zu 70 Gew.-%, insbesondere mindestens zu 80 Gew.-%, insbesondere mindestens zu 90 Gew.-% und insbesondere zu 100 Gew.-% aus PA 4.6 besteht.

4. Oberflächenmaterial nach Anspruch 2, **dadurch gekennzeichnet, dass** die Polyamidbasis 0 - 40 Gew.-%, insbesondere 1 - 30 Gew.-% und insbesondere 5 - 20 Gew.-% weitere, von PA 4.6 verschiedene Polyamide umfasst, insbesondere, PA 6 und/oder PA 6.6.

5. Oberflächenmaterial nach einem oder mehreren der vorangehenden Ansprüche, **dadurch gekennzeichnet, dass** die Gewichtsverhältnisse von Calciumphosphat zu Metallsulfid zwischen 5:1 und 1:1 betragen.

6. Oberflächenmaterial nach einem oder mehreren der vorangehenden Ansprüche, **dadurch gekennzeichnet dass** das mindestens eine Metallsulfid SnS₂, MoS₂, Bismutsulfid oder WS₂ sowie Kombinationen hiervon umfasst.

7. Oberflächenmaterial nach Anspruch 6, **dadurch gekennzeichnet, dass** die Füllstoffe folgende Zusammensetzung umfassen:
2-20 Gew.-% SnS₂,
70-97 Gew.-% Calciumphosphat
1-10 Gew.-% WS₂.

8. Oberflächenmaterial nach Anspruch 6 oder 7, **dadurch gekennzeichnet, dass** die Gewichtsanteile der Füllstoffe
1-3 SnS₂
9-13 Calciumphosphat
1 WS₂, und insbesondere
1,67 SnS₂
11 Calciumphosphat
1 WS₂ betragen.

9. Oberflächenmaterial nach einem oder mehreren der vorangehenden Ansprüche, **dadurch gekennzeichnet, dass** die Füllstoffe weitere tribologisch wirksame Stoffe umfassen und als weitere tribologisch wirksame Stoffe Verstärkungsstoffe, wie insbesondere Kohlenstofffasern, Glasfasern, Polymerfasern (insbesondere Aramidfasern); und/oder Festschmierstoffe, wie insbesondere PTFE, ZnS, BaSO₄, Graphit, Ruß, BN und/oder Kunststoffpartikel, wie insbesondere Aramid (PPTA)-, PPSO₂-, PI- und PAI-Partikel, Polyacrylatpartikel (PAR), PBA-Partikel, PBI-Partikel; und/oder Metalloxide, wie insbesondere Fe₂O₃, Al₂O₃, SiO₂, CrO₂, TiO₂, CuO, MgO, ZnO; und/oder Hartstoffpartikel, insbesondere keramische Partikel, wie SiC, Si₃N₄, BC, cubisches BN; und/oder Fluoride, wie insbesondere CaF₂, NaF, AlF₃; und/oder Schichtsilikate, wie insbesondere Kaolin, Glimmer, Wollastonit, Talk, Kieselsäure; und/oder metallische Feinpulver, wie insbesondere Bronze und Wismut; und/oder Pigmente oder Mischphasenoxidpigmente, wie insbesondere Co-Al, Cr-Sb-Ti, Co-Ti, Fe-Al oder Co-Cr enthalten sind, und dass der Anteil der weiteren tribologisch wirksamen Stoffe 0 - 40 Gew.-%, insbesondere 1 - 20 Gew.-% und insbesondere 1 - 10 Gew.-%, insbesondere 5 Gew-% des Oberflächenmaterials beträgt.

10. Oberflächenmaterial nach einem oder mehreren der vorangehenden Ansprüche, **dadurch gekennzeichnet, dass** die Polyamidbasis 50 - 95 Gew.-%, insbesondere 60 - 95 Gew.-% und insbesondere 70 - 90 Gew.-% des Oberflächenmaterials ausmacht.

11. Gleitlagerverbundwerkstoff mit einer metallischen Stützschicht, insbesondere aus Stahl oder Bronze, insbesondere mit einer porösen Trägerschicht, insbesondere aus Bronze, und mit einem die Poren der Trägerschicht ausfüllenden als Gleitmaterial dienenden Oberflächenmaterial nach einem oder mehreren der vorstehenden Ansprüche 1 bis 10.

12. Dreidimensionaler Formkörper für gleitende Beanspruchung bestehend aus oder mit einem Oberflächenmaterial nach einem oder mehreren der vorstehenden Ansprüche 1 bis 10, insbesondere als Spritzguss- oder Extrusionsteil und/oder durch additive Fertigung hergestellt.

13. Gleitelement hergestellt aus einem Gleitlagerverbundwerkstoff nach Anspruch 11 oder umfassend einen Formkörper nach Anspruch 12.

14. Gleitelement nach Anspruch 13, **dadurch gekennzeichnet, dass** es eine Gleitleiste, ein Gleitschuh oder Gleitkissen oder eine Gleitführung oder eine Gleitlagerschale, eine Gleitlagerbuchse oder - bundbuchse ist.

15. Gleitelement umfassend einen Formkörper nach Anspruch 12, **dadurch gekennzeichnet, dass** es ein Zahnrad, ein Getriebebauteil, eine Kabel- oder Kettenführung oder eine Transportkette ist.

## Claims

1. Polyamide-based surface material having fillers which improve the tribologic properties, **characterized in that**, the fillers comprise at least one metal sulfide and calcium phosphate and **in that** the proportion of the at least one metal sulfide and calcium phosphate in total is 1 - 30% by weight of the surface material, and **in that** the proportion of the at least one metal sulfide is 1-50% by weight and of calcium phosphate 50 - 99% by weight of the mixture of metal sulfide and calcium phosphate.

2. The surface material according to Claim 1, **characterized in that** the polyamide base of the surface material comprises at least 70% by weight, in particular, at least 80% by weight, in particular, at least 90% by weight and in particular, 100% by weight of polyamide.

3. The surface material according to Claim 1 or 2, **characterized in that** the polyamide base comprises PA 4.6 and consists, in particular, at least up to 60% by weight in particular, at least up to 70% by weight, in particular, at least up to 80% by weight, in particular, at least up to 90% by weight and in particular, up to 100% by weight of PA 4.6.

4. The surface material according to Claim 2, **characterized in that** the polyamide base comprises 0 - 40% by weight, in particular, 1 - 30% by weight and, in particular 5 - 20% by weight of additional polyamides differing from PA 4.6, in particular, PA 6 and/or PA 6.6.

5. The surface material according to one or to multiple of the preceding claims, **characterized in that** the weight ratios of calcium phosphate to metal sulfide are between 5:1 and 1:1.

6. The surface material according to one or to multiple of the preceding claims, **characterized in that** the at least one metal sulfide comprises SnS₂, MoSₛ, bismuth sulfide or WS₂ as well as combinations thereof.

7. The surface material according to Claim 6, **characterized in that** the fillers comprise the following composition:
2-20% by weight SnS₂,
70-97% by weight calcium phosphate
1-10% by weight WS₂.

8. The surface material according to Claim 6 or 7, **characterized in that** the weight proportions of the fillers are
1-3 SnS₂
9-13 calcium phosphate
1 WS₂, and, in particular, are
1,67 SnS₂
11 calcium phosphate
1 WS₂.

9. The surface material according to one or to multiple of the preceding claims, **characterized in that** the fillers comprise additional tribologically active materials and as additional tribologically active materials reinforcing materials, such as, in particular, carbon fibers, glass fibers, polymer fibers (in particular, aramide fibers); and/or solid lubricants, such as, in particular, PTFE, ZnS, BaSO₄, graphite, carbon black, BN and/or plastic particles, such as, in particular, aramide (PPTA) particles, PPSO₂ particles, PI particles and PAI particles, polyacrylate particles (PAR), PBA particles, PBI particles; and/or metal oxides, such as, in particular, Fe₂O₃, Al₂O₃, SiO₂, CrO₂, TiO₂, CuO, MgO, ZnO; and/or hard material particles, in particular, ceramic particles, such as SiC, Si₃N₄, BC, cubic BN; and/or fluorides, such as, in particular, CaF₂, NaF, AlF₃; and/or layer silicates, such as, in particular, kaolin, mica, wollastonite, talc, silica; and/or metallic fine powder, such as, in particular, bronze and bismuth; and/or pigments or mixed phase oxide pigments, such as, in particular, Co-Al, Cr-Sb-Ti, Co-Ti, Fe-Al or Co-Cr are included and **in that** the proportion of the additional tribologically active materials is 0 - 40% by weight, in particular, 1 - 20% by weight and, in particular, 1 - 10% by weight, in particular, 5% by weight of the surface material.

10. The surface material according to one or to multiple of the preceding claims, **characterized in that** the polyamide base constitutes 50 - 95% by weight, in particular, 60 - 95% by weight and, in particular, 70 - 90% by weight of the surface material.

11. A slide bearing composite material having a metallic support layer, in particular, of steel or bronze, in particular, having a porous carrier layer, in particular, of bronze, and having a surface material which fills the pores of the carrier layer and serves as a sliding material according to one or to multiple of the preceding Claims 1 through 10.

12. A three-dimensional molded body for sliding stress consisting of or having a surface material according to one or to multiple of the preceding Claims 1 through 10, produced, in particular, as an injection-molded part or extrusion part and and/or by additive fabrication.

13. A slide element produced from a slide bearing composite material according to Claim 11 or comprising a molded body according to Claim 12.

14. The slide element according to Claim 13, **characterized in that** it is a slide bar, a slide shoe or a slide pad or a slide guide or a slide bearing shell or a slide bearing bushing or a slide bearing collar bushing.

15. The slide element comprising a molded body according to Claim 12, **characterized in that** it is a gear, a transmission component, a cable guide or a chain guide or a transport chain.

## Revendications

1. Matériau de surface à base de polyamide avec des matières de charge améliorant les propriétés tribologiques, **caractérisé en ce que** les matières de charge comprennent au moins un sulfure de métal et du phosphate de calcium et **en ce que** la proportion du au moins un sulfure de métal et du phosphate de calcium est au total comprise entre 1 et 30% en poids du matériau de surface et **en ce que** la proportion du au moins un sulfure de métal est comprise entre 1 et 50% en poids et celle du phosphate de calcium est comprise entre 50 et 99% en poids dans le mélange de sulfure de métal et de phosphate de calcium.

2. Matériau de surface selon la revendication 1, **caractérisé en ce que** la base de polyamide du matériau de surface comprend au moins 70% en poids, en particulier au moins 80% en poids, en particulier au moins 90% en poids et en particulier 100% en poids de polyamide.

3. Matériau de surface selon la revendication 1 ou 2, **caractérisé en ce que** la base de polyamide comprend du PA 4.6 et en particulier au moins 60% en poids, en particulier au moins 70% en poids, en particulier au moins 80% en poids, en particulier au moins 90% en poids et en particulier 100% en poids de PA 4.6.

4. Matériau de surface selon la revendication 2, **caractérisé en ce que** la base de polyamide comprend entre 0 et 40% en poids, en particulier entre 1 et 30% en poids et en particulier entre 5 et 20% en poids d'autres polyamides différents du PA 4.6, en particulier du PA 6 et/ou du PA 6.6.

5. Matériau de surface selon l'une quelconque ou plusieurs des revendications précédentes, **caractérisé en ce que** les rapports en poids du phosphate de calcium sur le sulfure de métal sont compris entre 5:1 et 1:1.

6. Matériau de surface selon l'une quelconque ou plusieurs des revendications précédentes, **caractérisé en ce que** le au moins un sulfure de métal comprend SnS₂, MoS₂, sulfure de bismuth ou WS₂ et leurs combinaisons.

7. Matériau de surface selon la revendication 6, **caractérisé en ce que** les matières de charge comprennent la composition suivante:
entre 2 et 20% en poids de SnS₂,
entre 70 et 97% en poids de phosphate de calcium
entre 1 et 10% en poids de WS₂.

8. Matériau de surface selon la revendication 6 ou 7, **caractérisé en ce que** les proportions en poids des matières de charge sont
entre 1 et 3 de SnS₂
entre 9 et 13 de phosphate de calcium
1 de WS₂, et en particulier
1,67 de SnS₂
11 de phosphate de calcium
1 de WS₂.

9. Matériau de surface selon l'une quelconque ou plusieurs des revendications précédentes, **caractérisé en ce que** les matières de charge comprennent d'autres substances tribologiquement actives et **en ce que** des substances de renforcement comme en particulier des fibres de carbone, des fibres de verre, des fibres polymères (en particulier des fibres d'aramide); et/ou des lubrifiants solides, comme en particulier PTFE, ZnS, BaSO₄, graphite, noir de carbone, BN et/ou particules plastiques, comme en particulier des particules d'aramide (PPTA), de PPSO₂, de PI et de PAI, des particules de polyacrylate (PAR), des particules de PBA, des particules de PBI; et/ou des oxydes métalliques, comme en particulier Fe₂O₃, Al₂O₃, SiO₂, CrO₂, TiO₂, CuO, MgO, ZnO; et/ou des particules de matériau dur, en particulier des particules céramiques comme SiC, Si₃N₄, BC, BN cubique; et/ou des fluorures, comme en particulier CaF₂, NaF, AlF₃; et/ou des silicates en feuille comme en particulier le kaolin, le mica, la wollastonite, le talc, la silice; et/ou une poudre métallique fine comme en particulier du bronze et du bismuth; et/ou des pigments ou des pigments à base d'oxydes mixtes, comme en particulier Co-Al, Cr-Sb-Ti, Co-Ti, Fe-Al ou Co-Cr, tiennent lieu d'autres substances tribologiquement actives et **en ce que** la proportion des autres substances tribologiquement actives est comprise entre 0 et 40% en poids, en particulier entre 1 et 20% en poids et en particulier entre 1 et 10% en poids, en particulier est de 5% en poids du matériau de surface.

10. Matériau de surface selon l'une quelconque ou plusieurs des revendications précédentes, **caractérisé en ce que** la base de polyamide représente entre 50 et 95% en poids, en particulier entre 60 et 95% en poids et en particulier entre 70 et 90% en poids du matériau de surface.

11. Matériau composite pour palier lisse avec une couche de support métallique, en particulier en acier ou en bronze, en particulier avec un substrat poreux, en particulier en bronze, et avec un matériau de surface remplissant les pores du substrat et servant de matériau lubrifiant selon l'une quelconque ou plusieurs des revendications 1 à 10 précédentes.

12. Corps façonné tridimensionnel destiné à subir une contrainte frictionnelle et constitué de ou muni d'un matériau de surface selon l'une quelconque ou plusieurs des revendications 1 à 10 précédentes, en particulier réalisé sous la forme d'une pièce moulée par injection ou extrudée et/ou par fabrication additive.

13. Elément antifriction fabriqué en matériau composite pour palier lisse selon la revendication 11 ou comprenant un corps façonné selon la revendication 12.

14. Elément antifriction selon la revendication 13, **caractérisé en ce qu'**il s'agit d'une bande antifriction, d'un patin antifriction ou d'un coussin antifriction ou d'un guide antifriction ou d'un coussinet antifriction, d'une bague antifriction ou d'une douille à collet antifriction.

15. Elément antifriction comprenant un corps moulé selon la revendication 12, **caractérisé en ce qu'**il s'agit d'une roue dentée, d'un élément d'engrenage, d'un guide-câble ou guide-chaîne ou d'une chaîne de transport.
